# EUROPEAN PATENT SPECIFICATION

(11) **EP 1 847 184 B1**
(45) Date of publication and mention of the grant of the patent: **30.09.2009**
(21) Application number: 07012802.0
(22) Date of filing: 14.04.2005
(51) Int. Cl.: A24B 15/24, B01J 20/12, B01J 20/20

(54) **Adsorbent for the selective removal of nitrogen containing compounds from tobacco**
Adsorptionmittels zur selektiven Entfernung von Stickstoff-enthaltenden Verbindungen aus Tabak
Adsorbant pour l'élimination sélective de composes azotes du tabac

(30) Priority: 29.04.2004 US 835379
(43) Date of publication of application: 24.10.2007
(62) Divisional of application: 05778233.6
(73) Proprietor: Brown & Williamson Holdings, Inc., Wilmington, DE 19803 (US)
(72) Inventor: Mua, John-Paul, Advance North Carolina 27006 (US); Hayes, Brad L, Dublin Georgia 31021 (US)
(74) Representative: Read, Matthew Charles

(56) References cited:
- EP-A- 0 477 538
- EP-A- 0 823 206
- EP-A- 0 862 865
- WO-A-02/03817
- DE-U1- 9 413 689
- US-A- 4 765 908
- US-A- 5 601 097
- US-A1- 2002 134 394
- US-A1- 2004 045 565

## Description

The present invention is relevant to a process for removal of nitrogen containing compounds from tobacco with minimum removal of desired compounds such as alkaloids, phosphates and other compounds that contribute to the flavor of the smoking article or decrease formation of undesired compounds in the smoke.

Selectivity in tobacco component removal is vital for production of cigarettes with good smoke quality. Processes involve selective component removal from tobacco by extracting components from tobacco by liquid extraction and treating the tobacco extract with adsorbents and then adding back the treated extract to the tobacco. The tobacco may be in the form of washed lamina, fiber, or fiber formed sheets. The adsorbents can be in the form of organic or inorganic solids such as for example β-cyclodextrin, cellulose acetate, and combinations of bentonite and activated carbon.

International Publication No. WO 02/03817 discloses a process for manufacturing reconstituted tobacco with reduced nitrogenous content by submitting cured tobacco material, to an extraction with a solution containing sodium acetate, sodium hydroxide, potassium hydroxide or mixtures thereof. The extraction process, in addition to denitrifying the tobacco material, also produces reconstituted tobacco paper with characteristics similar to flue cured tobacco leaf.

European Patent Publication No. 0862865 A discloses a method for removing polypeptides from an aqueous extract of tobacco material. The method comprises the steps of treating the extract with an insoluble adsorbent selected from hydroxyapatite or a fuller's earth mineral such as bentonite. The extract is then separated from the adsorbent. Treatment of the aqueous extract with bentonite is said to produce an extract having a reduced pigment and polypeptide content.

US Patent No. 5,601,097 discloses a method for reducing the protein content of tobacco material which includes either: (1) extracting the tobacco material with an anionic surfactant; (2) treating the tobacco material with a proteolytic enzyme followed by extraction with a surfactant; (3) applying a surfactant solution to the tobacco material, separating the solution from the tobacco material, removing the surfactant and polypeptides from the tobacco material, optionally with the use of an insoluble adsorbent, and combining the tobacco material with the remaining solution; or (4) first extracting the tobacco material with an aqueous solvent and then with a surfactant.

US Patent Publication No. US 2002/0134394 discloses a method for reducing the content of nitrosamines in tobacco. In one embodiment, the method includes combining tobacco with a solvent to form a soluble portion. The soluble portion contains an initial total level of tobacco-specific nitrosamines per gram of the soluble portion. The soluble portion is contacted with a nitrosamine-reducing material such that the resulting weight percentage of the tobacco-specific nitrosamines per gram of said soluble portion is at least about 20% less than the initial total level of the tobacco-specific nitrosamines per gram of the soluble portion.

US Patent Publication No. US 2004/0045565 discloses a process for reducing lignin and nitrogenous content in tobacco lamina and tobacco fiber material, including whole leaf, stems, scraps, fines and lamina, as well as burley leaf and stem, in an extraction with a solution containing hydrogen peroxide and an alkali metal hydroxide.

The present invention is relevant to a process for removing Hoffmann analyte smoke precursors from a tobacco extract. The present invention is also relevant to a process for removing nitrogen containing compounds from tobacco with minimum removal of desired compounds such as alkaloids that contribute to the flavor of the tobacco and phosphates which have been found to decrease smoke formaldehyde formation. Additionally, proteins are precursors to smoke aromatic and heterocyclic amines and hence are nitrogen containing compounds that are targeted for removal.

The process generally involves mixing tobacco fines, stems, scraps, cut lamina, shredded stems, or any combination thereof with an aqueous solvent under conditions favoring the extracting of nitrogen containing compounds. The aqueous solvent extract and the tobacco materials are then mechanically separated by centrifugation or by filtration. The tobacco solids or fiber may be left as cut lamina; refined and made into sheets by a paper making process; or refined and digested then mixed with a binder and cast as sheet for band cast sheet processing. In processes for treating the solids, an extract or concentrated extract resulting from a process for treating the aqueous solvent extract is added back to the solids.

The aqueous solvent extract is either passed through an adsorbent packed column or mixed with an adsorbent and mechanically separated by filtration or by centrifugation. The extract is then either mixed with the tobacco solids and cast as sheet via a band cast process or concentrated. The concentrated extract may be added back to the tobacco solids or it may be added back to the tobacco solids after they have been cast into sheets via a paper making process.

The primary objective of the processes is to reduce the content of nitrogen containing compounds (i.e. proteins, TSNAs), polyphenols (Chlorogenic acid, Ruten, Scopoletin), nitrates and chlorides in the tobacco, while retaining desired constituents that contribute to the flavor (i.e. alkaloids, fructose and glucose) of the tobacco or reduce undesired constituents in the smoke (i.e. phosphates reduce formaldehyde concentration in the smoke).

The present invention seeks to provide an adsorbent for selective removal of nitrogen containing compounds from aqueous tobacco extracts.

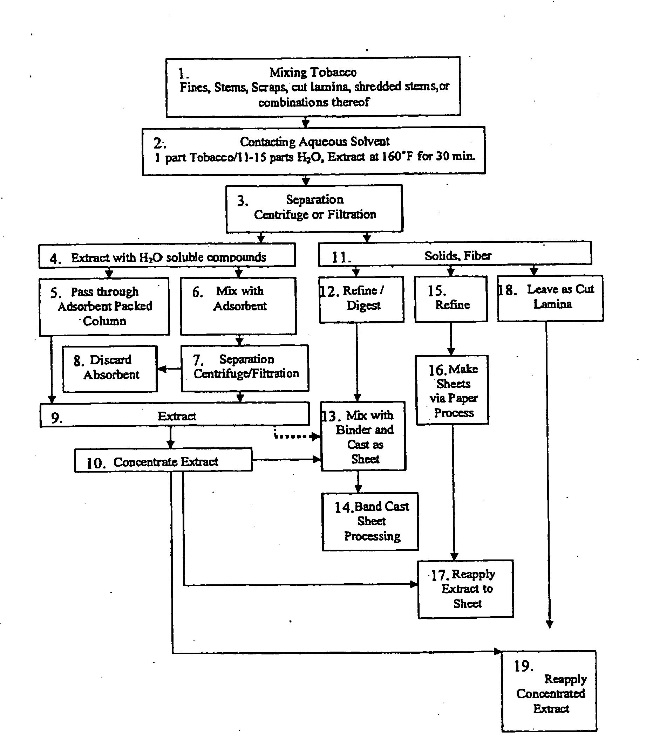

The drawing attached hereto is a flow diagram of a process for treating tobacco using adsorbents according to the present invention.

The process is best described with reference to the drawing. The first step of the process involves mixing (step 1) tobacco fines, stems, scraps, cut lamina, shredded stems, or any combination thereof. The mixed tobacco solids resulting from step 1 are then contacted at step 2 with an aqueous solvent under conditions favoring the selective extraction of nitrogen containing compounds. It has been determined that such conditions include adding one part of tobacco with about eleven to about fifteen parts of water and extracting at a temperature of about 160° F for about 30 minutes. The aqueous solvent extract or weak extract liquor (WEL) formed in step 2 and the solid tobacco materials of step 1 are then mechanically separated at step 3 by either filtration or centrifugation.

The WEL, as indicated at step 4, is either passed through an adsorbent packed column (step 5) or mixed with an adsorbent (step 6) and separated, as indicated at step 7, from the adsorbent The separation or dewatering at step 7 may be accomplished by filtration, by basket centrifuge, or by stacked disc centrifuge. The adsorbent resulting from step 7 is then discarded, as indicated at step 8. Whether the extract with the water soluble compounds at step 4 is passed through a packed column (step 5) or mixed with an adsorbent (step 6), an extract with reduced nitrogen containing compounds (step 9) is yielded. The extract with reduced nitrogen containing compounds (step 9) is then either mixed (step 13) with the tobacco solids and cast as sheet (step 14) via a band cast process or concentrated (step 10). Concentration (step 10) is accomplished by placing extract from step 9 under a vacuum to evaporate the aqueous solvent and yield a concentrated extract having about 30% to about 35% solids. The concentrated extract from step 10 may be applied directly to the tobacco solids at step 19 or it may be applied to the tobacco solids after they have been cast into sheets at step 17 via a paper making process.

The tobacco solids (step 11) or fiber may be left as cut lamina (step 18); refined (step 15) and made into sheets by a paper making process (step 16); or refined and digested (step 12). Digestion at step 12 may be accomplished by digesting with an alkali (up to 12% dwb) at about 90° C to about 121° C, up to 30 psig for about 15 to about 120 minutes. The refined and digested solids resulting from step 12 are then mixed at step 13 with a binder and extract from step 9 or concentrated extract from step 10 and cast as sheet from step 14 via band cast sheet processing.

The refined tobacco solids resulting from step 15 are made into sheets via a paper making process (step 16), after which the concentrated extract resulting from step 10 is added back to the tobacco material that is now in the form of a sheet (step 17). Additionally, the tobacco solids from step 1 I may be left as cut lamina at step 18 and the concentrated extract resulting from step 10 may be reapplied directly at step 19.

The present invention relates to the adsorbent material used in packed column in step 5 or the mixing step 6. It has been determined that mixtures of bentonite clay and activated carbon, β-cyclodextrin, and cellulose acetate produce the desired effect of selectively removing Hoffmann anlaytes from the WEL (step 4) without removing the desired compounds such as alkaloids and phosphates. Cyclodextrins are starched derived cyclic maltooligosaccharides, known to form inclusion complexes with several compounds. Due to the latter property and low water solubility characteristics, cyclodextrins are used to encapsulate flavors, de-bitter fruit juices, and separate cholesterol from egg yolk.

According to the present invention, an adsorbent is provided for selective removal of nitrogen containing compounds from an aqueous tobacco extract, the adsorbent comprising a mixture of bentonite and activated carbon material, and a material selected from the group consisting of cellulose acetate, β-cyclodextrin and combinations thereof.

In different embodiments of the invention, the bentonite and activated carbon material comprises bentonite and activated carbon in the following ratios:
a) about one part of bentonite to about one part of activated carbon;
b) about one part of bentonite to about two parts of activated carbon;
c) about one part of bentonite to about three parts of activated carbon;
d) about one part of bentonite to about four parts of activated carbon; or
e) about two parts of bentonite to about one part of activated carbon.

### EXAMPLES 1-4

Experiments were undertaken to evaluate the effectiveness of adsorbents against an untreated control, bentonite and activated carbon. Two different methods of contacting the WEL with the adsorbents were evaluated, packed column technology (PC) and re-circulation (Re). The objective of these experiments was to evaluate adsorbents against bentonite and activated carbon for selective Hoffmann analyte removal (i.e. soluble proteins, TSNAs, polyphenols, chlorides, and nitrate) and the retention of selected desired components (i.e. alkaloids, phosphates, and sugars) in weak extract liquor. It has been determined that increased phosphate levels in tobacco blends decrease smoke formaldehyde formation. Proteins are precursors to smoke aromatic and heterocyclic amines. Therefore the percentage of removal of TSNAs, protein, and polyphenols (chlorogenic acid, ruten, and scopoletin) is reported and the percentage of retention of alkaloids and phosphates is reported.

The adsorbents tested were cellulose acetate, β-cyclodextrin, and several combinations of bentonite and activated carbon. Since it is often difficult to achieve complete mechanical separation of the selected adsorbents from the WEL after mixing with the adsorbents, both packed column and re-circulation processes were tested. The following examples depict the results of analyses run on the WEL after contacting the adsorbents of the present invention as well as several control samples.

### Example 1:

### Preparation of weak Extract Liquor:

WEL was prepared by first mixing a blend of flue-cured and burley scrap in a ratio of about 1 to 1. This tobacco blend was then extracted once with water for about 15 to about 30 minutes at about 60° C to about 90° C. The tobacco solids were then dewatered by centrifugation. The liquids or WEL side was retained while the tobacco solids side was discarded.

### Packed Column Preparation (PC):

Laboratory size glass columns were separately hand packed with about 25g to about 50g of cellulose acetate, activated carbon and β-cyclodextrin. Approximately 600 ml. of the WEL was then passed through each column at an elution rate of about 20 ml. per minute. The eluted extracts were subsequently submitted for analysis.

**Table I: Burley weak extract treatment with adsorbents in a Packed Column**

| Sample Description/ Adsorbent | Soluble Protein mg/ml (% rem.) | Nitrate mg/ml (% rem.) | Chloride mg/ml (% rem) | TSNAs ppm (% rem.) | Polyphenols mg/ml (% rem.) | | | Alkaloid mg/ml (% ret.) | Phosphates mg/ml (% ret.) |
|---|---|---|---|---|---|---|---|---|---|
| | | | | | Chlorogenic acid | Ruten | Scopoletin | | |
| | | | | | | | | | |
| Untreated | .47 | 99.49 | 570.05 | .528 | .034 | .027 | >.005 | 1175.7 | 215.22 |
| | | | | | | | | | |
| Cellulose Acetate | .29 (38) | 532.42 (47) | 410.72 (28) | .089 (83) | 0.00 (100) | 0.00 (100) | 0.00 (100) | 373.49 (32) | 0.00 (0) |
| | | | | | | | | | |
| Activated Carbon | .26 (45) | 612.76 (39) | 418.50 (27) | .007 (99) | 0.00 (100) | 0.00 (100) | 0.00 (100) | 0.00 (0) | 126.74 (59) |
| | | | | | | | | | |
| β- cyclodextrin | .17 (64) | 620.76 (38) | 319.17 (44) | .212 (60) | 0.00 (100) | 0.00 (100) | >.005 ADL^{a} | 665.64 (57) | 126.3 (59) |

| | | | | | | | | | |
|---|---|---|---|---|---|---|---|---|---|
| ^{a} Above detention limit | | | | | | | | | |

β-cyclodextrin was found to be the most effective adsorbent in removing soluble proteins from the WEL by removing 64%. Additionally, β-cyclodextrin removed 60% of the TSNAs from the WEL while the WEL retained 57% of the alkaloids and 59% of the phosphates. Cellulose acetate was also found to be effective by removing 38% of the soluble proteins and 83% of the TSNAs while retaining 32% of the alkaloids. The activated carbon was found not to be selective in the removal of nitrogen containing compounds by removing 100% of the alkaloids.

### Example 2:

### Re-circulation (RC):

Separate samples of approximately 9g of β-cyclodextrin and approximately 9g of bentonite were placed into separate Erlenmeyer flasks. Approximately 300 ml of the WEL prepared in Example 1 was mixed with each 9g sample of an adsorbent. The resulting solutions were stirred in the Erlenmeyer flasks for about 15 to about 30 minutes at about 90° F. The mixtures were then separately centrifuged. Each extract was then decanted and submitted for analyses. The residues were then discarded. The following table depicts the results of analyses run on the WEL after contacting the adsorbents of the present invention as well as control samples.

**Table. II: Burley weak extract treatment with adsorbents via Recirculation**

| Sample Description/ Adsorbent | Soluble Protein (mg/ml) (% rem.) | Nitrate mg/ml (% rem.) | Chloride mg/ml (% rem.) | TSNAs ppm (% rem.) | Polyphenols mg/ml (% rem.) | | | Alkaloid mg/ml (% ret.) | Phosphates mg/ml (% ret.) |
|---|---|---|---|---|---|---|---|---|---|
| | | | | | Chlorogenic acid | Ruten | Scopoletin | | |
| | | | | | | | | | |
| Untreated | .55 | 1250.07 | 644.91 | .471 | .342 | .025 | >.005 | 1414.26 | 207.07 |
| | | | | | | | | | |
| β- cyclodextrin | .41 (25) | 1190.08 (5) | 605.62 (6) | .408 (13) | .040 (18) | .032 (-24) | >.005 (ADL) | 1325.07 (94) | 186.60 (90) |
| | | | | | | | | | |
| Bentonite | .19 (83) | 1312.02 (-4) | 781.96 (-21) | .388 (18) | 0.00 (100) | 0.00 (100) | >.005 (ADL) | 461.97 (33) | 0.00(0) |

β-cyclodextrin was found to be effective in the recirculation process as well. β-cyclodextrin removed 25% of the proteins from the WEL while the WEL retained 94% of the alkaloids and 90% of the phosphates. Bentonite was found not to be as selective in removal since the WEL only retained 33% of the alkaloids and none of the phosphates.

### Example 3:

Separate samples of bentonite, activated carbon, and a mixture comprising about 1 part of bentonite for each part of activated were placed into separate Erlenmeyer flasks. WEL, as prepared in example 1, was added (1 L aliquots) to the Erlenmeyer flasks containing the activated carbon and bentonite samples to obtain a .8% solution. WEL was added to the Erlenmeyer flask containing the mixture of bentonite and activated carbon to obtain a solution having 1% bentonite and 1% activated carbon. The resulting solutions were then stirred in the Erlenmeyer flasks for about 15 to about 30 minutes at about 90° F. The mixtures were then separately centrifuged. Each extract was then decanted and submitted for analyses. The residues were then discarded. The following table depicts the results of analyses run on the WEL after contacting the adsorbents of the present invention as well as control samples.

**Table III: Burley weak extract treatment with adsorbents via Recirculation**

| Sample Description | Soluble Protein mg/ml (% rem.) | TSNAs ppm (% rem.) | Polyphenols mg/ml (% rem.) | | | Alkaloid mg/ml (% ret.) | Nitrate mg/ml (% ret.) |
|---|---|---|---|---|---|---|---|
| | | | Chlorogenic acid | Ruten | Scopoletin | | |
| | | | | | | | |
| Untreated | 284 | .79 | .156 | -2 | .04 | .6 | .55 |
| | | | | | | | |
| Bentonite (.8%) | 105 (63) | .42 (46.8) | 0 (100) | .17 (15) | .02 (100) | .63 (-5.0) | .59 (-7.3) |
| | | | | | | | |
| Activated Carbon (AC, 8%, pellets) | 120 (57.7) | .06 (92.4) | 0 (100) | 0 (100) | 0 (100) | .06 (10) | .58 (-5.5) |
| | | | | | | | |
| Bentonite / AC (1%/1%) | 43 (85) | .15 (81) | 0 (100) | 0 (100) | 0 (100) | 32 (53.3) | .57 (-3.6) |

The bentonite and activated carbon (1:1) adsorbent was found to be more effective in selectively removing the soluble proteins, TSNAs, chlorogenic acid, ruten, and scopoletin without removing a substantial amount of alkaloids. The separate bentonite and activated carbon adsorbents were found not to be selective in the removal of nitrogen containing compounds since they adsorbed almost all of the alkaloids.

### Example 4:

A variety of combinations of bentonite and activated carbon were tested in relation to varying amounts of separate samples of bentonite and activated carbon. These tests were performed on two WELs prepared as in example 1, one prepared from burley and the other prepared from flue cured tobacco. The WELs were tested with the adsorbents using the recirculation process in example 2.

**Table IV: Burley or Flue weak extract treatment with adsorbents via Recirculation**

| Sample Description / Adsorbent^{c} | TSNAs^{a} ppm (% rem.) | Soluble Protein mg/ml (%rem.) | Polyphenols mg/ml (% rem.) | | | Alkaloid mg/ml (% ret.) |
|---|---|---|---|---|---|---|
| | | | Chlorogenic acid | Ruten | Scopoletin | |
| | | | | | | |
| Untreated Burley | .92 | 289 | .18 | 0.25 | 0.04 | .75 |
| | | | | | | |
| Bent. (.5%) | .56 (39) | 139 (52) | .10 (44) | 0.1 (56) | 0.01 (75) | .77 (0) |
| | | | | | | |
| Bent. (1%) | .51 (45) | 101 (65) | 0.01 (94) | 0.02 (92) | 0.01 (75) | .71 (95) |
| | | | | | | |
| Bent. (2%) | .54 (41) | 79 (83) | 0.00 (100) | 0.00 (100) | 0.01 (75) | .69 (92) |
| | | | | | | |
| AC (.4%)^{b} | .11 (88) | 170 (41) | 0.00 (100) | 0.00 (100) | 0.00 (100) | .47 (63) |
| | | | | | | |
| AC (.8%) ^{b} | .05 (95) | 160 (45) | 0.00 (100) | 0.00 (100) | 0.00 (100) | .39 (52) |
| | | | | | | |
| AC (1%) ^{b} | .01 (99) | 160(45) | 0.00(100) | 0.00 (100) | 0.00(100) | .33 (44) |
| | | | | | | |
| AC (2%) ^{b} | 0.00 (100) | 140 (52) | 0.00 (100) | 0.00 (100) | 0.00 (100) | 0.00 (0) |
| | | | | | | |
| Bent/AC (1:1) | .09 (90) | 60 (79) | 0.00 (100) | 0.00 (100) | 0.00 (100) | 0.49 (65) |
| | | | | | | |
| Bent./AC (1:2) | .02 (98) | 40 (86) | 0.00 (100) | 0.00 (100) | 0.00 (100) | 0.33 (44) |
| | | | | | | |
| Bent./AC (1:3) | 0.00 (100) | 80 (73) | 0.00 (100) | 0.00 (100) | 0.00 (100) | 0.32 (43) |
| | | | | | | |
| Bent./AC (1:4) | 0.00 (100) | 99 (65) | 0.00 (100) | 0.00 (100) | 0.00 (100) | 0.30 (40) |
| | | | | | | |
| Bent./AC (2:1) | 0.10 (87) | 20 (93) | 0.00(100) | 0.00 (100) | 0.00(100) | 0.42 (56) |
| | | | | | | |
| Untreated Flue-cure | 0.52 | 458 | 0.34 | 0.30 | 0.04 | 0.47 |
| | | | | | | |
| Bent./AC (1:1) | 0.00 (100) | 92 (73) | 0.00 (100) | 0.00 (100) | 0.00 (100) | .31 (66) |

| | | | | | | |
|---|---|---|---|---|---|---|
| ^{a} NNK, NNN, NAB, NAT. ^{b} Activated carbon powder (0.4-2.0 parts powder is as effective as 5-8 parts pellets). ^{c} Based on 1.0% (w/v) of adsorbent used. | | | | | | |

The adsorbents of the different combinations of bentonite and activated carbon were more effective in removing soluble proteins, TSNAs and polyphenols than the bentonite or activated carbon alone. Additionally, the adsorbents of the different combinations of bentonite and activated carbon were selected in removal of these constituents in that a substantial percentage of the alkaloids remained in the WEL. Additionally, the one to one bentonite and activated carbon adsorbent was found to selectively remove the nitrogen containing compounds without the undesired removal of alkaloids in a WEL made from flue cured tobacco.

## Claims

1. An adsorbent for selective removal of nitrogen containing compounds from an aqueous tobacco extract, wherein said adsorbent comprises a mixture of bentonite and activated carbon material, and a material selected from the group consisting of cellulose acetate, β-cyclodextrin and combinations thereof.

2. The adsorbent of Claim 1 wherein said bentonite and activated carbon material comprises bentonite and activated carbon in a ratio of about one part of bentonite to about one part of activated carbon.

3. The adsorbent of Claim 1 wherein said bentonite and activated carbon material comprises bentonite and activated carbon in a ratio of about one part of bentonite to about two parts of activated carbon.

4. The adsorbent of Claim 1 wherein said bentonite and activated carbon material comprises bentonite and activated carbon in a ratio of about one part of bentonite to about three parts of activated carbon

5. The adsorbent of Claim 1 wherein said bentonite and activated carbon material comprises bentonite and activated carbon in a ratio of about one part of bentonite to about four parts of activated carbon.

6. The adsorbent of Claim 1 wherein said bentonite and activated carbon material comprises bentonite and activated carbon in a ratio of about two parts of bentonite to about one part of activated carbon.

## Patentansprüche

1. Adsorptionsmittel zur selektiven Entfernung von stickstoffhaltigen Verbindungen aus einem wässrigen Tabakextrakt, wobei das Adsorptionsmittel ein Gemisch von Bentonit- und Aktivkohlematerial sowie ein Material umfasst, das aus der Gruppe bestehend aus Celluloseacetat, β-Cyclodextrin und Kombinationen davon ausgewählt ist.

2. Adsorptionsmittel nach Anspruch 1, wobei das Bentonitund Aktivkohlematerial Bentonit und Aktivkohle in einem Verhältnis von etwa einem Teil Bentonit zu etwa einem Teil Aktivkohle umfasst.

3. Adsorptionsmittel nach Anspruch 1, wobei das Bentonitund Aktivkohlematerial Bentonit und Aktivkohle in einem Verhältnis von etwa einem Teil Bentonit zu etwa zwei Teilen Aktivkohle umfasst.

4. Adsorptionsmittel nach Anspruch 1, wobei das Bentonitund Aktivkohlematerial Bentonit und Aktivkohle in einem Verhältnis von etwa einem Teil Bentonit zu etwa drei Teilen Aktivkohle umfasst.

5. Adsorptionsmittel nach Anspruch 1, wobei das Bentonitund Aktivkohlematerial Bentonit und Aktivkohle in einem Verhältnis von etwa einem Teil Bentonit zu etwa vier Teilen Aktivkohle umfasst.

6. Adsorptionsmittel nach Anspruch 1, wobei das Bentonitund Aktivkohlematerial Bentonit und Aktivkohle in einem Verhältnis von etwa zwei Teilen Bentonit zu etwa einem Teil Aktivkohle umfasst.

## Revendications

1. Adsorbant pour l'élimination sélective de composés contenant de l'azote d'un extrait de tabac aqueux, dans lequel ledit adsorbant comprend un mélange de matière de bentonite et de charbon actif, et une matière sélectionnée parmi le groupe constitué de l'acétate de cellulose, de la β-cyclodextrine et de combinaisons de celles-ci.

2. Adsorbant selon la revendication 1, dans lequel ladite matière de bentonite et de charbon actif comprend de la bentonite et du charbon actif dans un rapport d'environ une part de bentonite pour environ une part de charbon actif.

3. Adsorbant selon la revendication 1, dans lequel ladite matière de bentonite et de charbon actif comprend de la bentonite et du charbon actif dans un rapport d'environ une part de bentonite pour environ deux parts de charbon actif.

4. Adsorbant selon la revendication 1, dans lequel ladite matière de bentonite et de charbon actif comprend de la bentonite et du charbon actif dans un rapport d'environ une part de bentonite pour environ trois parts de charbon actif.

5. Adsorbant selon la revendication 1, dans lequel ladite matière de bentonite et de charbon actif comprend de la bentonite et du charbon actif dans un rapport d'environ une part de bentonite pour environ quatre parts de charbon actif.

6. Adsorbant selon la revendication 1, dans lequel ladite matière de bentonite et de charbon actif comprend de la bentonite et du charbon actif dans un rapport d'environ deux parts de bentonite pour environ une part de charbon actif.
